# EUROPEAN PATENT APPLICATION

(11) **EP 4 509 479 A1**
(43) Date of publication of application: **19.02.2025**
(21) Application number: 23020382.0
(22) Date of filing: 16.08.2023
(51) Int. Cl.: C04B 18/167, C04B 20/02

(54) **METHOD OF PRODUCING A SUPPLEMENTARY CEMENTITIOUS MATERIAL**

(71) Applicant: Holcim Technology Ltd, 6300 Zug (CH)
(72) Inventor: Kruspan, Peter, 4412 Nuglar (CH); Wögerbauer, Clemens, 8917 Oberlunkhofen (CH)
(74) Representative: SONN Patentanwälte GmbH & Co KG

(57) **Abstract**

Method of producing a supplementary cementitious material comprising:
- combusting a carbon-containing fuel by means of fluidized bed combustion, comprising using a mineral by-product as a bed material in said fluidized bed combustion, said bed material being thermally activated during said fluidized bed combustion,
- collecting bottom ash resulting from said fluidized bed combustion and collecting the thermally activated bed material,
said bottom ash and said thermally activated bed material constituting the supplementary cementitious material.

## Description

The invention refers to a method of producing a supplementary cementitious material.

The invention also refers to a supplementary cementitious material and a composite cement comprising the supplementary cementitious material.

Cementitious materials are one of the principal ingredients of a concrete mixture. There are two types of cementitious materials: hydraulic cement and supplementary cementitious materials (SCMs). Hydraulic cements set and harden by reacting chemically with water, which is called hydration. Portland cement is the most common hydraulic cement. SCMs are used in conjunction with Portland cement in concrete mixtures. In particular, it has become common practice to use pozzolanic materials as supplementary cementitious materials in Portland cement mixtures.

In known processes for producing cement clinker, raw material is fed into a rotary kiln after it has been preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0.7 tons of CO₂ per ton of Portland cement clinker are emitted by the calcination of the raw materials and from the fuel combustion in the rotary kiln.

By substituting supplementary cementitious materials for Portland cement the specific emission of CO₂ in the production of cement will be reduced. Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural pozzolans, burnt oil shale, or calcined clay.

There have also been attempts to recycle mineral by-products, such as concrete demolition materials so as to make them useable as a component of composite cements. The prior art in the field of construction and demolition materials management has predominantly focused on disposal methods, with a limited scope for high-value utilization. The generation of construction and demolition materials, particularly concrete, is extensive, leading to considerable environmental and logistical challenges. Traditional disposal methods, such as landfilling, are not only environmentally damaging but also economically inefficient due to the rising costs associated with landfill space. Furthermore, the current industry practice of using concrete demolition materials for low-value applications, such as road sub-base material, does not fully exploit the potential of this resource. There has been a growing interest in the reuse of concrete demolition materials as a supplementary cementitious material to partially replace cement in new cement and concrete production. However, there are inherent challenges in this approach due to the variability in the quality of demolition materials and its inconsistent performance as a supplementary cementitious material.

The disposal of ash, such as fly ash, a by-product from combustion processes, has been a topic of concern, mainly due to its potentially harmful constituents and the environmental and health risks associated with its disposal. Traditional disposal methods, such as landfilling, have become increasingly restricted due to revised regulatory requirements aimed at limiting the release of harmful substances into the environment. Fly ash contains heavy metals and other pollutants, which, when landfilled, can potentially leach into the soil and groundwater, causing environmental contamination. Furthermore, landfilling does not make use of the potentially valuable materials contained in the ash, such as silica, alumina, and iron oxides. Consequently, there has been growing interest in reusing bottom ash, particularly as a supplementary cementitious material in cement and concrete production. This approach has the potential to divert significant volumes of waste from landfill, reducing environmental impact, while also conserving natural resources by substituting a portion of the virgin materials required in cement production.

Other types of mineral by-products include steel slag, a waste material from the steelmaking process, such as electric arc furnace oxidizing slag.

The instant invention aims at providing an improved process for recycling mineral by-products for being used as a supplementary cementitious material.

Therefore, the invention provides a method of producing a supplementary cementitious material comprising:
- combusting a carbon-containing fuel by means of fluidized bed combustion, comprising using a mineral by-product as a bed material in said fluidized bed combustion, said bed material being thermally activated during said fluidized bed combustion,
- collecting bottom ash resulting from said fluidized bed combustion and collecting the thermally activated bed material,
said bottom ash and said thermally activated bed material constituting the supplementary cementitious material.

The invention is based on the idea to use a mineral by-product instead of sand as a bed material in fluidized bed combustion of carbon-containing fuel. The introduction of a mineral by-product into the combustion process has significant advantages. One primary benefit is the thermal activation of the by-product due to the high temperatures inherent to the combustion process. This thermal activation enhances the reactivity of the mineral by-product, enabling it to be used as a supplementary cementitious material (SCM) with improved performance in cement and concrete production. Additionally, the bottom ash generated during the combustion process, which would otherwise require disposal or landfilling, adds pozzolanic activity to the SCM. This integrated process of thermal activation and bottom ash utilization not only optimizes the use of waste material but also minimizes waste generation, thereby offering an environmentally friendly and economically efficient solution. This inventive approach streamlines the process of converting waste into valuable material, significantly reducing the need for separate processing steps and landfill space, and contributing to sustainable practices in the cement and energy production sectors. The resulting SCM is a combination of thermally activated mineral by-product and bottom ash.

Collecting the bottom ash from the combustion process is preferred over other types of ashes, such as fly ash or cyclone dust from the fluidized bed furnace, because it was found that bottom ash contains less amounts of heavy metals which have health and safety risks, and/or a negative effect on the reactivity of the resulting cementitious compositions. However, fly ash or cyclone dust from the fluidized bed furnace may also be collected and used as a component of the supplementary cementitious material in addition to bottom ash.

A preferred source of mineral by-product is a hardened concrete material , in particular concrete demolition material. Construction and demolition material is a complex mix of materials, primarily composed of cement paste, sand, and aggregates like gravel, or crushed stone. It can also contain reinforcing steel, gypsum, brick, glass, wood, and other materials depending on the original concrete structure and the demolition process. This waste is classified under different waste codes of the European Waste Catalogue (EWC) depending on its composition and potential contamination. The EWC is a hierarchical list of waste descriptions established by EU Commission decision 2000/532/EC2. Construction and demolition waste falls under chapter 17 of the EWC. Concrete demolition waste falls under sub-chapter 17 01 und comprises the following waste codes:
- 17 01 01: concrete
- 17 01 02: bricks
- 17 01 03: tiles and ceramics
- 17 01 06: mixtures of, or separate fractions of concrete, bricks, tiles and ceramics containing hazardous substances
- 17 01 07: mixtures of concrete, bricks, tiles and ceramics other than those mentioned in 17 01 06

Other sub-chapters comprise wood, glass and plastic (17 02), bituminous mixtures, coal tar and tarred products (17 03), metals (17 04), soil (17 05), and other fractions (17 06 - 17 09) .

For the purpose of the instant invention, concrete demolition materials according to EWC waste code 17 01, in particular 17 01 01 and/or 17 01 07, may be used as the bed material in the fluidized bed combustion.

In this connection, a preferred embodiment of the invention provides that the hardened concrete material, in particular the concrete demolition material, comprises:
- ≥ 90 wt.-% of concrete, concrete products, mortar, concrete masonry units, unbound aggregate, natural stone, and/or hydraulically bound aggregate; and
- ≤ 10 wt.-% of clay masonry units (i.e., bricks and tiles), calcium silicate masonry units, and/or aerated non-floating concrete.

Another suitable mineral by-product is electric arc furnace oxidizing slag.

As to the mineralogical composition of the mineral by-product, a preferred embodiment of the invention provides that the mineral by-product comprises ≥ 20 wt.-% calcite and ≤ 40 wt.-% quartz, measured by the XRD Rietveld method.

More specifically, the mineral by-product may preferably comprise:
- 20-35 wt.-% silicates, such as quartz and feldspars (albite, anorthite, orthoclase, microcline),
- 25-45 wt.-% carbonates, such as calcite and dolomite,
- 25-35 wt.-% of an amorphous/microcrystalline fraction, and
- optionally 1-5 wt.-% sheet silicates, such as muscovite and biotite.

The thermal activation of the mineral by-product occurring as a result of using the mineral by-product as bed material in fluidized bed combustion enhances the cementitious properties of the mineral by-product, such as its reactivity. Preferably, the thermal activation of the mineral by-product increases its CaO or free lime content.

For thermal activation, relatively low temperatures are sufficient so that an energy efficient process may be conducted. Preferably, the bed material during said combusting step has a temperature of 300-900°C, preferentially 700-900°C.

In order for the mineral by-product to be suitable for being used as a bed material, the mineral by-product shall preferably have a particle size or particle size distribution typically used for traditional bed material, in particular quartz sand. According to a preferred embodiment of the invention, the mineral by-product has a particle size distribution characterized by a D10 ≥ 100 µm and a D90 ≤ 1,200 µm. D10 refers to the 10^{th} percentile of the particle size distribution by volume of the particle size, i.e. 10% of the volume is formed by particles having a size that is below the D10 diameter. Analogously, D90 refers to the 90^{th} percentile of the particle size distribution by volume of the particle size, i.e. 90% of the volume is formed by particles having a size that is below the D90 diameter.

The density of the mineral by-product may also determine its ability to be used as bed material. Preferably, the density of the mineral by-product shall be selected in the same range as is traditionally the case with quartz sand, in particular if the mineral by-product contains aggregate material from demolished concrete which usually has very similar physical properties, including the density, as quartz sand. In this connection, a preferred embodiment of the invention provides that the mineral by-product has a density of 2.5 - 2.8 g/cm3.

Generally, any type of carbon-containing fuel may be combusted in the method according to the invention. With a view to reducing the CO₂ footprint of the method, a CO₂ neutral fuel is preferred. Preferably, biomass, in particular wood, may be used as said carbon-containing fuel. The term biomass may refer to any type of plant-derived organic material. Biomass can come from numerous sources, such as agricultural residues including crop residues like straw and husks, forestry residues including wood residues as well as residues from forestry operations such as sawdust and wood chips, municipal solid waste including biodegradable waste materials like food and garden waste, as well as non-biodegradable materials that can be burned for energy, such as paper and certain types of plastic, and industrial waste and co-products, such as waste materials from food processing operations, like spent grain from breweries.

Bottom ash obtained from the fluidized bed combustion of biomass, in particular wood, typically contains phases that are favorable for being used in composite cements, such as free lime, spurrite and a considerable portion of amorphous phases. Preferably, the bottom ash has a free lime content of 5-20 wt.-%. Preferably, the bottom ash has an amorphous phase content of 30-60 wt.-%.

The invention also refers to a supplementary cementitious material that is obtained or obtainable by a method according to the invention. The supplementary cementitious material contains bottom ash from the fluidized bed combustion of a carbon-containing fuel, such as biomass, in particular wood, at a temperature of preferably 300-900°C or 700-900°C, and a particulate mineral by-product that has been thermally activated by having been used as bed material in the fluidized bed combustion.

Further, the invention refers to a composite cement comprising a supplementary cementitious material obtained or obtainable by a method according to the invention and a hydraulic cement.

According to another aspect, the invention refers to the use of mineral by-product particles, in particular a hardened concrete material , as a bed material in fluidized bed combustion of a carbon-containing fuel.

The invention will now be described in more detail with reference to the following examples.

### Materials:

In the examples, the following mineral by-products have been used:
Ex1: Granulate from Slag Tap Furnace (after sand blasting, i.e. waste, contaminated) having a particle size of 315 - 1,600 µm
Ex2: Concrete demolition waste, EWC waste code 17 01 07, having a particle size of 500 - 1,000 µm
Ex3: Electric arc furnace oxidizing slag having a particle size of 500-800 µm
Ex4 (Reference): Quartz sand having a particle size of 400 - 1,200 µm

### Combustion process:

Each of the mineral by-products was used as a bed material in a fluidized bed combustion in a fluidized bed furnace, in which wood was combusted. The combustion process was controlled so as to reach a temperature of the bed material of 700-900°C.

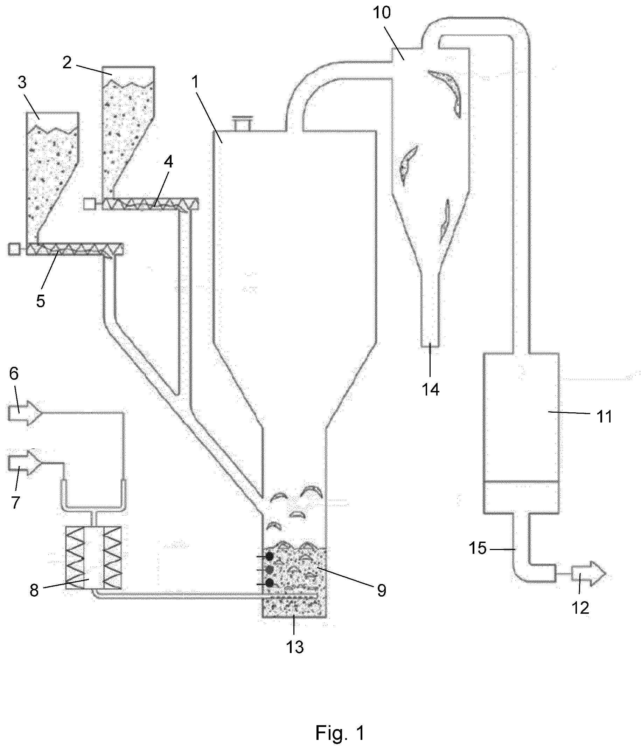

An exemplary combustion device is shown in Fig. 1. The combustion device comprises a fluidized bed furnace 1, into which wood is fed from feedstock hoppers 2 and 3 and screw feeders 4 and 5. A fluidized bed 9 is maintained in a bottom region of the fluidized bed furnace 1 by fluidizing a bed material. The gas used for fluidization is a mixture of pressurized air 6 and nitrogen 7 that are mixed and preheated in a preheater 8. The ash resulting from the combustion process comprises a coarser fraction (bottom ash) that is collected at the bottom of the fluidized bed furnace 1 at 13. The ash further comprises a finer fraction that is entrained with the combustion gases and separated from the combustion gas in a cyclone separator 10. The separated cyclone ash is collected at 14. A remaining, even finer fraction of the ash is separated from the combustion gas in a filter 11 and collected at 15. The purified combustion gas is released at 12.

### Analysis of mineral phases of bed material:

The mineralogical composition of the bed material was measured before the combustion process ("input"), after the combustion process together with the ash collected at the bottom of the fluidized bed furnace 1 ("bottom ash"), together with the ash collected at the cyclone separator 10 ("cyclone ash") and together with the ash collected at the subsequent filter 11 ("filter ash"). Table 1 provides an overview of the measuring results for Examples Ex1, Ex2, Ex3 and Ex4 (Ref). All values were measured by the XRD Rietveld method and are given in wt%.

Further, the moisture content and the bulk chemical composition of the bed material was measured before the combustion process ("input"), after the combustion process together with the ash collected at the bottom of the fluidized bed furnace 1 ("bottom ash"), together with the ash collected at the cyclone separator 10 ("cyclone ash") and together with the ash collected at the subsequent filter 11 ("filter ash"). Table 2 provides an overview of the measuring results for Examples Ex1, Ex2, Ex3 and Ex4 (Ref). All values were measured by an X-ray fluorescence method and are given in wt.-%.

Further, the content of contaminants (minor components and traces) in the bed material was measured before the combustion process ("input"), after the combustion process together with the ash collected at the bottom of the fluidized bed furnace 1 ("bottom ash"), together with the ash collected at the cyclone separator 10 ("cyclone ash") and together with the ash collected at the subsequent filter 11 ("filter ash"). Table 3 provides an overview of the measuring results for Examples Ex1, Ex2, Ex3 and Ex4 (Ref). All values were measured by an X-ray fluorescence method and are given in ppm (parts per million).

It follows from an analysis of tables 2 and 3 that Examples Ex2 and Ex3 are best suitable for being used as a supplementary cementitious material. Within these examples, the bottom fraction of the wood ash has the lowest contents of SO₃, alkalis, P₂O₅ and Cl, when compared to the cyclone and the filter fraction of the ash, which makes the materials M2.2 and M3.2 most suitable. Further, table 3 reveals that the content of contaminating elements such as As, Cd, Cr, Zn and CrVI increase from bottom ash to cyclone ash and filter ash, so that bottom ash is preferred. In particular, the material M2.2 matches the reference material M4.2 and the concentration of contaminating elements are below the limits laid down in the Swiss Regulation on the Prevention and Disposal of Waste (Annex 3, Sec 2).

**Table 1**

| | Ex1 | | | | Ex2 | | | | Ex3 | | | | **Ex4** (Ref) | | | |
|---|---|---|---|---|---|---|---|---|---|---|---|---|---|---|---|---|
| | Input | Bottom ash | Cyclon e ash | Filter ash | Input | Bottom ash | Cyclone ash | Filter ash | Input | Bottom ash | Cyclone ash | Filter ash | Input | Bottom ash | Cyclone ash | Filter ash |
| Material No. | M1.1 | M1.2 | M1.3 | M1.4 | M2.1 | M2.2 | M2.3 | M2.4 | M3.1 | M3.2 | M3.3 | M3.4 | M4.1 | M4.2 | M4.3 | M4.4 |
| C2S | | | | | <0.1 | 3.7 | 4.1 | 10.5 | 2.8 | 1.9 | 0.9 | 0.7 | | | | |
| C3A | | | | | <0.1 | 0.7 | 0.4 | 3.5 | 1.7 | 2.8 | 0.5 | 0.8 | | | | |
| CF | | | | | | 1.2 | 1.3 | 5.4 | 2.5 | 3.9 | 0.3 | 0.9 | | | | |
| Lime | | 0.6 | 0.3 | 0.1 | 0.0 | 2.1 | 0.7 | 0.0 | | | | | | | | |
| Quartz | 0.2 | 14.4 | 25.4 | 11.2 | 20.8 | 32.8 | 23.0 | 5.5 | 2.2 | 3.6 | 28.1 | 11.4 | 93.7 | 82.3 | 22.9 | 8.7 |
| Calcite | | 0.7 | 1.9 | 2.8 | 27.2 | 16.8 | 4.6 | 6.2 | 1.5 | 1.8 | 4.0 | 6.5 | 0.1 | 0.1 | 2.2 | 3.1 |
| Dolomite | | | | | 3.6 | 0.5 | 1.1 | 0.1 | | | | | | | | |
| Magnesite | | | | | | | | | 3.8 | 4.1 | 0.7 | 1.4 | | | | |
| Albite | | 6.4 | 7.0 | 5.5 | 2.4 | 5.3 | 12.6 | 1.2 | 0.9 | 1.9 | 7.5 | 3.7 | 0.9 | 1.8 | 5.8 | 0.5 |
| Orthoclase | | 1.9 | 4.1 | 2.1 | 1.5 | 2.0 | 1.6 | 0.1 | 0.7 | 0.8 | 4.0 | 1.5 | 2.1 | 2.6 | 2.4 | 0.2 |
| Hornblende | | 0.4 | 2.4 | 1.8 | 0.5 | 1.3 | 2.9 | 1.7 | | | | | 0.7 | 0.8 | 3.3 | 2.4 |
| Diopside | | 3.5 | 2.1 | 1.8 | 1.0 | 0.9 | 0.7 | 0.5 | | | | | 0.3 | 0.3 | 0.5 | 0.2 |
| Muscovite | | 3.9 | 0.6 | 0.4 | 0.2 | 2.5 | 0.3 | 0.1 | <0.1 | <0.1 | <0.1 | <0.1 | <0.1 | <0.1 | <0.1 | <0.1 |
| Gehlenite | | 7.0 | 3.5 | 9.9 | 0.8 | 0.5 | 1.5 | 8.5 | 23.9 | 25.4 | 3.8 | 7.2 | <0.1 | <0.1 | 2.2 | 2.5 |
| Hematite | | 0.2 | 0.3 | 0.8 | | | | | | | | | | | | |
| Magnetite | | | | | | | | | 1.6 | 5.6 | 1.2 | 1.8 | | | | |
| Wuestite | | | | | | | | | 8.0 | 2.5 | 0.9 | 0.6 | | | | |
| Iron metallic | 0.1 | | | | | | | | | | | | | | | |
| Amorphous | 99.6 | 60.9 | 52.6 | 63.6 | 41.9 | 29.8 | 45.3 | 56.6 | 50.4 | 45.8 | 48.3 | 63.3 | 2.2 | 11.9 | 60.6 | 82.4 |
| | 100.0 | 100.0 | 100.0 | 100.0 | 99.8 | 100.0 | 100.0 | 100.0 | 100.0 | 100.0 | 100.0 | 100.0 | 100.0 | 99.9 | 100.0 | 100.0 |

**Table 2**

| | **Ex1** | | | | **Ex2** | | | | **Ex3** | | | | **Ex4 (Ref)** | | | |
|---|---|---|---|---|---|---|---|---|---|---|---|---|---|---|---|---|
| | Input | Bottom ash | Cyclone ash | Filter ash | Input | Bottom ash | Cyclone ash | Filter ash | Input | Bottom ash | Cyclone ash | Filter ash | Input | Bottom ash | Cyclone ash | Filter ash |
| Material No. | M1.1 | M1.2 | M1.3 | M1.4 | M2.1 | M2.2 | M2.3 | M2.4 | M3.1 | M3.2 | M3.3 | M3.4 | M4.1 | M4.2 | M4.3 | M4.4 |
| Moisture [%] | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| LOI [%] | 0.6 | 0.4 | 2.4 | 4.2 | 20.4 | 9.9 | 3.6 | 5.9 | 0.8 | 0.4 | 2.9 | 5.1 | 0.3 | 0.3 | 3.5 | 6.3 |
| SiO₂ [%] | 54.9 | 52.5 | 56.6 | 37.0 | 38.6 | 51.4 | 50.5 | 30.0 | 20.2 | 22.5 | 53.9 | 33.8 | 96.5 | 92.3 | 51.4 | 31.9 |
| Al₂O₃ [%] | 20.1 | 10.7 | 12.9 | 12.6 | 5.2 | 6.4 | 10.6 | 9.7 | 12.8 | 12.8 | 12.0 | 12.0 | 1.4 | 2.7 | 11.7 | 10.6 |
| Fe₂O₃ [%] | 8.8 | 6.5 | 4.2 | 6.6 | 2.1 | 2.3 | 3.9 | 5.1 | 25.7 | 25.3 | 6.1 | 8.9 | 0.91 | 1.3 | 4.7 | 6.2 |
| CaO [%] | 7.3 | 19.4 | 11.6 | 22.6 | 27.6 | 23.0 | 17.3 | 35.5 | 28.8 | 27.2 | 12.6 | 25.2 | 0.03 | 0.84 | 13.3 | 25.2 |
| MgO [%] | 1.9 | 2.3 | 2.4 | 3.8 | 1.8 | 1.5 | 2.3 | 3.9 | 4.3 | 4.0 | 2.6 | 3.9 | 0.00 | 0.15 | 2.4 | 1.8 |
| SO₃ [%] | 0.13 | 1.2 | 0.92 | 3.0 | 0.66 | 0.62 | 1.1 | 2.5 | 0.26 | 0.29 | 0.42 | 1.6 | 0.10 | 0.13 | 0.71 | 2.6 |
| K₂O [%] | 2.2 | 1.8 | 3.6 | 2.9 | 0.93 | 1.8 | 4.0 | 2.1 | 0.13 | 0.34 | 3.8 | 3.0 | 0.78 | 1.3 | 5.0 | 4.5 |
| Na₂O [%] | 0.96 | 2.5 | 2.2 | 2.1 | 0.55 | 0.91 | 1.6 | 0.55 | 0.07 | 0.14 | 1.5 | 0.89 | 0.00 | 0.30 | 1.7 | 1.2 |
| TiO₂ [%] | 0.94 | 0.97 | 0.55 | 0.73 | 0.23 | 0.25 | 0.49 | 0.52 | 0.56 | 0.56 | 0.54 | 0.64 | 0.03 | 0.22 | 0.63 | 0.63 |
| Mn₂O₃ [%] | 0.10 | 0.21 | 0.54 | 1.1 | 0.06 | 0.11 | 0.67 | 1.3 | 4.0 | 3.9 | 0.92 | 1.7 | 0.02 | 0.06 | 1.0 | 1.9 |
| P₂O₅ [%] | 0.52 | 0.74 | 0.75 | 1.4 | 0.08 | 0.14 | 1.9 | 1.2 | 0.40 | 0.39 | 0.76 | 1.3 | 0.01 | 0.09 | 2.0 | 2.8 |
| Cr₂O₃ [%] | 0.03 | 0.10 | 0.05 | 0.09 | 0.01 | 0.01 | 0.05 | 0.08 | 1.7 | 1.6 | 0.19 | 0.30 | 0.01 | 0.01 | 0.06 | 0.10 |
| SrO [%] | 0.06 | 0.03 | 0.02 | 0.04 | 0.04 | 0.04 | 0.03 | 0.07 | 0.00 | 0.00 | 0.01 | 0.04 | 0.00 | 0.00 | 0.02 | 0.05 |
| ZnO [%] | 0.03 | 0.36 | 0.14 | 0.35 | 0.01 | 0.02 | 0.09 | 0.13 | 0.10 | 0.09 | 0.08 | 0.24 | 0.00 | 0.01 | 0.12 | 0.26 |
| Cl [%] | 0.1 | 0.1 | 0.2 | 0.47 | 0.1 | 0.1 | 0.2 | 0.26 | 0.1 | 0.1 | 0.1 | 0.31 | 0.1 | 0.1 | 0.3 | 0.59 |

**Table 3**

| | Ex1 | | | | Ex2 | | | | Ex3 | | | | Ex4 (Ref) | | | |
|---|---|---|---|---|---|---|---|---|---|---|---|---|---|---|---|---|
| | Input | Bottom ash | Cyclone ash | Filter ash | Input | Bottom ash | Cyclone ash | Filter ash | Input | Bottom ash | Cyclone ash | Filter ash | Input | Bottom ash | Cyclone ash | Filter ash |
| Material No. | M1.1 | M1.2 | M1.3 | M1.4 | M2.1 | M2.2 | M2.3 | M2.4 | M3.1 | M3.2 | M3.3 | M3.4 | M4.1 | M4.2 | M4.3 | M4.4 |
| Ag [ppm] | 2 | 8 | 4 | 4 | 2 | 2 | 2 | 2 | 2 | 2 | 2 | 2 | 2 | 2 | 2 | 2 |
| As [ppm] | 29 | 20 | 18 | 55 | 8 | 9 | 13 | 30 | 6 | 7 | 16 | 43 | 4 | 5 | 15 | 41 |
| Ba [ppm] | 1149 | 2168 | 1099 | 1796 | 166 | 276 | 914 | 1295 | 1655 | 1662 | 1112 | 1752 | 211 | 281 | 1207 | 1818 |
| Cd [ppm] | 1 | 3 | 3 | 7 | 1 | 2 | 2 | 6 | 1 | 1 | 1 | 3 | 1 | 1 | 4 | 13 |
| Co [ppm] | 33 | 35 | 18 | 33 | 5 | 5 | 17 | 26 | 4 | 5 | 15 | 25 | 3 | 5 | 24 | 37 |
| Cr [ppm] | 207 | 653 | 310 | 632 | 44 | 83 | 340 | 518 | 10751 | 10891 | 1071 | 1816 | 71 | 116 | 365 | 700 |
| Cu [ppm] | 127 | 6580 | 1225 | 1315 | 16 | 33 | 85 | 76 | 303 | 270 | 81 | 164 | 14 | 21 | 87 | 120 |
| Mn [ppm] | 652 | 1413 | 3735 | 8817 | 420 | 687 | 4988 | 9414 | 28124 | 27312 | 6363 | 11627 | 49 | 370 | 6852 | 14021 |
| Mo [ppm] | 17 | 20 | 7 | 13 | 2 | 2 | 5 | 5 | 20 | 20 | 7 | 18 | 6 | 6 | 5 | 9 |
| Ni [ppm] | 127 | 199 | 91 | 137 | 21 | 33 | 103 | 96 | 48 | 68 | 78 | 109 | 68 | 80 | 119 | 170 |
| Pb [ppm] | 69 | 659 | 394 | 394 | 25 | 28 | 46 | 54 | 22 | 15 | 60 | 104 | 5 | 10 | 47 | 68 |
| Sb [ppm] | 8 | 87 | 23 | 31 | 1 | 1 | 2 | 3 | 1 | 2 | 2 | 4 | 1 | 1 | 2 | 4 |
| Se [ppm] | 2 | 2 | 2 | 2 | 2 | 2 | 2 | 2 | 2 | 2 | 2 | 3 | 2 | 2 | 2 | 2 |
| Sn [ppm] | 6 | 123 | 46 | 45 | 2 | 2 | 9 | 7 | 18 | 14 | 8 | 13 | 2 | 2 | 7 | 9 |
| Ti [ppm] | 2 | 1 | 1 | 2 | 1 | 1 | 1 | 1 | 1 | 1 | 1 | 3 | 1 | 1 | 1 | 10 |
| V [ppm] | 250 | 53 | 64 | 95 | 39 | 37 | 70 | 76 | 410 | 407 | 100 | 141 | 3 | 12 | 82 | 127 |
| Zn [ppm] | 262 | 2848 | 1077 | 1824 | 56 | 170 | 718 | 1175 | 782 | 724 | 920 | 1477 | 24 | 115 | 800 | 2069 |
| Hg [ppm] | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 |
| Cr VI Eluate [ppm] | 0.02 | 0.2 | 2.0 | 20.4 | 0.8 | 0.2 | 2.0 | 1.5 | 0.1 | 2.8 | 1.6 | 3.2 | 0.02 | 0.9 | 9.1 | 17.8 |

### Concrete mix design:

The bed material examples of Table 1 were used to produce a composite cement. For that purpose, the bed material from the examples of Table 1 was ground to a fineness characterized by a D50 of 9-11 µm (measured with Laser diffraction, wet dispersion, Mie model) and mixed with a certified Portland cement CEM I 42.5 N in accordance with the EN 197-1 standard, i.e. the product "Holcim Normo 4 SG", consisting of Portland cement clinker and gypsum. The composite cement in each case comprised 70 wt.-% of Holcim Normo 4 SG and 30 wt.-% of a supplementary cementitious material from Table 1.

The composite cement was used to produce a concrete according to the following mix design:

| | |
|---|---|
| Composite cement | 300 kg/m³ |
| Water | depending on water/binder ratio |
| Sand (0-4mm, rounded) | 573 kg/m³ |
| Sand (0-2mm, crushed) | 229 kg/m³ |
| Gravel (4-8mm, rounded) | 153 kg/m³ |
| Gravel (8-16mm, rounded) | 459 kg/m³ |
| Gravel (16-32mm, rounded) | 497 kg/m³ |

The concrete was mixed in a laboratory mixer of the type Pemat/Zyklos ZK 30 HE (Year 2013) having a mixer capacity of 30 liters. The mixed concrete volume was 25 liters.

The following mixing procedure was used:
- Wet wiping out of the mixer (with sponge to achieve damp mixer surface).
- All aggregate fractions were put into the mixer and one third of the amount of water plus WA24-portion (water which is absorbed after 24 h) was added. Mixing for 1 minute, then 10 minutes at rest.
- Adding of composite cement, start of mixing and subsequent addition of the remaining two thirds of water.
- Mixing for at least 3 minutes.

### Concrete performance tests:

Concrete performance tests were conducted with concrete having the mix design outlined above by varying the type of supplementary cementitious material contained in the composite cement, as indicated in Table 4. The composite cement in each case comprised 70 wt.-% of Holcim Normo 4 SG and 30 wt.-% of a supplementary cementitious material from Table 1, the latter being indicated by reference to the material no. to be found in the 3^{rd} row of Table 1.

First, slump tests were conducted, in order to identify which water/binder (w/b) ratio is required in order to obtain a slump of 200mm in a Holcim Cone slump test carried out 10 minutes after mixing of the fresh concrete and 45 minutes after mixing of the fresh concrete. For this purpose, each concrete mix of Table 4 was assessed at 3 different w/b ratios, spanning the range of 150-250 mm slump. The w/b ratio required for obtaining a slump of 200mm was calculated by interpolation of the w/b ratios spanning the range of 150-250 mm slump.

The Holcim cone slump test is performed with a manual slump flow table according to EN 12350-5 comprising the following steps:
- cleaning of table with wet sponge before testing
- filling of cone in 2 equal concrete layers which are compacted with 10 strokes each
- 15 automated shocks of the table
- After initial testing ('AM 0' -> measuring of the concrete diameter in 2 perpendicular directions) the concrete is transferred back into the mixer and left there with closed cover until 10 minutes or 45 minutes, respectively, have elapsed after first mixing.
- The concrete is then again shortly mixed for 10 seconds and the slump flow ('AM 15') determined.

Second, the compressive strength of concrete samples was measured at 1 day, 2 days and 28 days for each of the 3 different w/b ratios mentioned above. The strength performance for a virtual concrete mix having a 200mm slump was calculated by interpolation of the strength values spanning the range of 150-250 mm slump.

In Table 4, the performance results are given in percentages compared to a reference concrete comprising 100% Holcim Normo 4 SG.

It follows from Table 4 that bottom ash is preferred over cyclone ash for use in the construction industry. The performance of material M2.2 matches or is even better than the performance of the reference material M4.2. Further, due to preferential water requirement, the material 3.2 as bed material shows best performance results.

**Table 4**

| **Material Type** | **Water Requirement to Obtain 200 mm slump** | | **Strength Performance of '200 mm-Mix'** | | |
|---|---|---|---|---|---|
| | **@ 10 Min.** | **@ 45 Min.** | **@ 1d** | **@ 2d** | **@ 28d** |
| **100% Normo 4 SG [N4SG] (= Ref.)** | **100 %** | **100 %** | **100 %** | **100 %** | **100 %** |
| 70% N4SG + 30% M1.1 | 98 % | 100 % | 66 % | 70 % | 81 % |
| 70% N4SG + 30% M1.2 | 101 % | 100 % | 58 % | 68 % | 72 % |
| 70% N4SG + 30% M1.3 | 109 % | 111 % | 34 % | 39 % | 46 % |
| 70% N4SG + 30% M2.1 | 109 % | 109 % | 59 % | 65 % | 73 % |
| 70% N4SG + 30% M2.2 | 104 % | 102 % | 72 % | 74 % | 80 % |
| 70% N4SG + 30% M2.3 | 112 % | 112 % | 61 % | 68 % | 78 % |
| 70% N4SG + 30% M3.1 | 93 % | 95 % | 77 % | 79 % | 84 % |
| 70% N4SG + 30% M3.2 | 94 % | 95 % | 81 % | 80 % | 79 % |
| 70% N4SG + 30% M3.3 | 109 % | 109 % | 63 % | 69 % | 79 % |
| 70% N4SG + 30% M4.1 | 102 % | 102 % | 70 % | 71 % | 74 % |
| 70% N4SG + 30% M4.2 | 104 % | 104 % | 68 % | 69 % | 71 % |
| 70% N4SG + 30% M4.3 | 109 % | 110 % | 72 % | 81 % | 85 % |

With reference to Example Ex2, further tests have been carried out with alternative sources of concrete demolition waste (CDW). Table 5 shows the mineralogical composition of such alternative sources of concrete demolition waste, which have proven to be suitable for the invention and have achieved similar results as the concrete demolition waste used in the Example Ex2. All values listed in table 5 were measured by the XRD Rietveld method and are given in wt.-%.

**Table 5**

| **CDW no.** | **1** | **2** | **3** | **4** | **5** | **6** | **7** | **8** | **9** | **10** |
|---|---|---|---|---|---|---|---|---|---|---|
| Quartz | 20 | 20 | 22 | 21 | 22 | 22 | 22 | 26 | 25 | 21 |
| Albite | 6 | 6 | | 8 | 6 | 5 | 6 | 9 | 7 | 6 |
| Anorthite | | | 10 | | | | | | | |
| Orthoclase & Microcline | 2 | 1 | | 2 | 2 | 1 | 1 | 3 | 2 | < 0.5 |
| Calcite | 32 | 31 | 37 | 41 | 41 | 40 | 36 | 18 | 30 | 31 |
| Dolomite | 4 | 3 | 3 | 3 | 2 | 1 | 1 | 3 | 2 | 2 |
| Muscovite & Biotite | 1 | 1 | 2 | 3 | 3 | 1 | 1 | < 1 | 3 | 2 |
| Clinochlore | < 0.5 | < 0.5 | | 1 | 2 | 1 | 1 | | | |
| Chlorite | | | 2 | | | | | 3 | 2 | 2 |
| Hornblende | | | | | | | | 2 | | |
| Hematite | | | | | | | | | | 1 |
| Unhydrated Clinker & 'Gypsum' | | | | | | | | 3 | | |
| Amorphous & undefined | 35 | 38 | 24 | 21 | 22 | 29 | 32 | 33 | 29 | 35 |

| **CDW no.** | **11** | **12** | **13** | **14** | **15** | **16** | **17** | **18** | **19** | |
|---|---|---|---|---|---|---|---|---|---|---|
| Quartz | 35 | 31 | 23 | 27 | 26 | 31 | 47 | 20 | 32 | |
| Albite | 11 | 8 | 3 | 4 | 3 | 2 | 2 | 5 | 10 | |
| Anorthite | - | - | - | - | - | - | - | - | - | |
| Orthoclase & Microcline | 3 | 4 | 1 | 2 | 1 | 1 | 2 | 2 | 2 | |
| Calcite | 19 | 24 | 26 | 23 | 31 | 17 | 23 | 21 | 16 | |
| Dolomite | 3 | 4 | 5 | 2 | 6 | < 1 | 7 | 20 | 4 | |
| Muscovite & Biotite | 5 | 4 | 5 | 6 | 3 | 2 | 1 | < 1 | 4 | |
| Clinochlore | - | - | - | - | - | - | - | - | - | |
| Chlorite | < 1 | < 1 | 1 | 1 | 2 | - | - | 1 | 1 | |
| Hornblende, Serpentine | - | - | - | - | - | - | - | 2 | 3 | |
| Hematite | - | - | - | - | - | - | - | - | - | |
| Unhydrated Clinker & 'Gypsum' | - | - | - | - | - | 4 | 1 | 1 | 2 | |
| Amorphous & undefined | 25 | 25 | 36 | 35 | 28 | 43 | 17 | 27 | 26 | |

## Claims

1. Method of producing a supplementary cementitious material comprising:
- combusting a carbon-containing fuel by means of fluidized bed combustion, comprising using a mineral by-product as a bed material in said fluidized bed combustion, said bed material being thermally activated during said fluidized bed combustion,
- collecting bottom ash resulting from said fluidized bed combustion and collecting the thermally activated bed material,
said bottom ash and said thermally activated bed material constituting the supplementary cementitious material.

2. Method according to claim 1, wherein the mineral by-product comprises ≥ 20 wt.-% calcite and ≤ 40 wt.-% quartz, measured by the XRD Rietveld method.

3. Method according to claim 1 or 2, wherein the mineral by-product comprises:
- 20-35 wt.-% silicates, such as quartz and feldspars (albite, anorthite, orthoclase, microcline),
- 25-45 wt.-% carbonates, such as calcite and dolomite,
- 25-35 wt.-% of an amorphous/microcrystalline fraction, and
- optionally 1-5 wt.-% sheet silicates, such as muscovite and biotite.

4. Method according to claim 1, 2 or 3, wherein the mineral by-product comprises at least one material selected from hardened concrete material, in particular concrete demolition material, or electric arc furnace oxidizing slag.

5. Method according to claim 4, wherein the hardened concrete material comprises:
- ≥ 90 wt.-% of concrete, concrete products, mortar, concrete masonry units, unbound aggregate, natural stone, and/or hydraulically bound aggregate; and
- ≤ 10 wt.-% of clay masonry units (i.e., bricks and tiles), calcium silicate masonry units, and/or aerated non-floating concrete.

6. Method according to any one of claims 1 to 5, wherein the mineral by-product has a particle size distribution **characterized by** a D10 ≥ 100 µm and a D90 ≤ 1,200 µm.

7. Method according to any one of claims 1 to 6, wherein the mineral by-product has a density of 2.5 - 2.8 g/cm3.

8. Method according to any one of claims 1 to 7, wherein the bed material during said combusting step has a temperature of 300-900°C, preferably 700-900°C.

9. Method according to any one of claims 1 to 8, wherein biomass, preferably wood, or paper sludges, is used as said carbon-containing fuel.

10. Supplementary cementitious material obtainable by a method according to any one of claims 1 to 9.

11. Composite cement comprising a supplementary cementitious material obtainable by a method according to any one of claims 1 to 9 and a hydraulic cement.

12. Use of mineral by-product particles, in particular a hardened concrete material, as a bed material in fluidized bed combustion of a carbon-containing fuel.
